# EUROPÄISCHE PATENTSCHRIFT

(11) **EP 4 160 065 B1**
(45) Veröffentlichungstag und Bekanntmachung des Hinweises auf die Patenterteilung: **02.09.2026**
(21) Anmeldenummer: 22198720.9
(22) Anmeldetag: 29.09.2022
(51) Int. Cl.: F16K 31/44

(54) **AKTUATOR MIT STEUERBARER KUPPLUNG**
ACTUATOR WITH CONTROLLABLE CLUTCH
ACTIONNEUR À EMBRAYAGE RÉGLABLE

(30) Priorität: 29.09.2021 DE 102021125285
(43) Veröffentlichungstag der Anmeldung: 05.04.2023
(73) Patentinhaber: Müller, Friedrich, 74196 Neuenstadt (DE)
(72) Erfinder: Köhler, Udo, 74670 Forchtenberg (DE)
(74) Vertreter: Lenzing Gerber Stute

(56) Entgegenhaltungen:
- EP-A1- 1 366 317
- EP-A1- 2 888 512
- EP-B1- 1 366 317
- EP-B1- 2 888 512
- WO-A1-2018/011188
- JP-A- H06 207 683

## Beschreibung

Die vorliegende Erfindung betrifft einen Aktuator mit einem beweglich gelagerten Stellglied und mindestens einem Antrieb zur Verstellung des Stellgliedes zwischen zwei Endstellungen.

Aktuatoren eingangs genannter Art sind bekannt und dienen beispielsweise dazu elektrische Signale in eine Bewegung und eine Steuerung eines Mechanismus oder Systems umzusetzen. Sie sind damit unter anderem elementarer Bestandteil der modernen Regelungstechnik. So kommen Aktuatoren beispielsweise zur Steuerung eines Mediums über Ventile zum Einsatz, indem sie die Einstellung des Volumenstroms in dem Ventil ermöglichen.

Am Markt sind verschiedenste Aktuatoren erhältlich. Bestimmte Ausführungsformen weisen elektromechanische Antriebe für die Verstellung eines Stellglieds auf, wobei das Stellglied zur Beeinflussung eines Systems dient. Nachteilig hierbei ist, dass das Stellglied ausschließlich durch den elektromechanischen Antrieb verstellbar ist und dieser darüber hinaus eine Verstellung des Steuerrohrs durch einen weiteren Antrieb verhindert. Somit ist es nicht möglich das Stellglied in einem Fehlerfall, wie einem Stromausfall, so zu verstellen, dass der Aktuator in einen sicheren Zustand versetzbar ist. EP 1 366 317 A1 zeigt einen Aktuator aus dem Stand der Technik.

Andere Aktuatoren weisen einen elektromagnetischen Antrieb auf. Um ein Stellglied zu verstellen oder in Position zu halten, wird eine elektrische Spule kontinuierlich bestromt wobei das Stellglied bei stromfreier Spule mittels einer Rückstelleinrichtung in eine festgelegte Position verstellbar sein kann. Derartige Aktuatoren erfordern in Abhängigkeit der Position des Stellglieds unterschiedlich hohe magnetische Kräfte, wobei die Antriebskomponenten entsprechend der höchsten erforderlichen magnetischen Kraft ausgelegt sind. Folglich weisen Aktuatoren mit einem elektromagnetischen Antrieb nachteilig einen hohen Energieverbrauch auf.

Ferner sind fremdgesteuerte Akuatoren über einen pneumatischen oder hydraulischen Antrieb zur Verstellung eines Stellglieds am Markt erhältlich. Um das Stellglied zu verstellen oder in Position zu halten, wird ein neutrales Steuermedium kontinuierlich unter hohem Energieaufwand zugeführt. Nachteilig weisen auch diese Aktuatoren einen hohen Energieverbrauch auf.

Der vorliegenden Erfindung liegt demgegenüber die Aufgabe zugrunde, einen Aktuator bereitzustellen, der in einem Fehlerfall in einen sicheren Zustand versetzbar ist und darüber hinaus einen geringen Energieverbrauch aufweist.

Diese Aufgabe wird durch einen Aktuator gemäß den Merkmalen des Anspruchs 1 gelöst. Der Antrieb wirkt erfindungsgemäß auf ein relativ zum Stellglied beweglich gelagertes kraftübertragendes Element, wobei das kraftübertragende Element und das Stellglied mittels einer gesteuerten Kupplung kuppelbar sind, wobei das Stellglied nur bei wirkender Kupplung mittels des Antriebs in Richtung seiner einen ersten Endstellung und/oder in Richtung seiner einen zweiten Endstellung verstellbar ist, und dass eine Rückstelleinrichtung das Stellglied bei nicht wirkender Kupplung in seine erste Endstellung oder in seine zweite Endstellung verstellt.

Das Stellglied ist mittels des Antriebs zwischen seiner einen ersten Endstellung und seiner einen zweiten Endstellungen sowie ebenfalls in diese Endstellungen verstellbar. Die zweite Endstellung kann dadurch bestimmt sein, dass der Aktuator in einen sicheren Zustand versetzbar ist, sofern sich das Stellglied in seiner zweiten Endstellung befindet.

Der Kerngedanke der Erfindung ist es, dass das Stellglied auch unabhängig von dem Antrieb in seine erste Endstellung oder in seine zweite Endstellung verstellbar ist.

Zu diesem Zweck sieht die Erfindung eine gesteuerte Kupplung vor, wobei mittels der Kupplung ein relativ zu dem Stellglied beweglich gelagertes kraftübertragendes Element und das Stellglied kuppelbar sind. Der Antrieb wirkt derart auf das kraftübertragende Element, dass dieses eine durch den Antrieb erzeugte Kraft, sofern die Kupplung wirkt, auf das Stellglied überträgt, sodass das Stellglied durch den Antrieb in Richtung seiner ersten Endstellung und/oder in Richtung seiner zweiten Endstellung verstellbar ist. Eine Verstellung des Stellglieds durch den Antrieb ist folglich nur möglich, wenn die Kupplung wirkt, wobei unter einer wirkenden Kupplung zu verstehen ist, dass das kraftübertragende Element und das Stellglied gekuppelt sind.

Damit das Stellglied bei nicht wirkender Kupplung unabhängig von dem Antrieb verstellbar ist, ist eine auf das Stellglied wirkende Rückstelleinrichtung vorzusehen, wobei das Stellglied durch die Rückstelleinrichtung ausschließlich bei nicht wirkender Kupplung in seine erste Endstellung oder in seine zweite Endstellung verstellbar ist. Folglich ist der Aktuator auch in einem Fehlerfall des Antriebs in einen sicheren Zustand versetzbar, sodass eine kritische Fehlerauswirkung vermeidbar ist.

Um ein ungewolltes Lösen der Kupplung zu verhindern, ist darauf zu achten, dass die bei aktivierter Kupplung zwischen dem kraftübertragenden Element und dem Stellglied wirkenden Kräfte größer sind, als sämtliche auf das Stellglied wirkenden Kräfte, beispielsweise eine durch die Rückstelleinrichtung oder eine von außerhalb des Aktuators aufgebrachte Kraft, die der gekuppelten Verbindung entgegenwirken. Selbstverständlich ist es möglich, dass weitere Kräfte auf das Stellglied wirken.

In einer bevorzugten Ausführungsform ist es von Vorteil, wenn das Stellglied bei wirkender Kupplung durch den Antrieb von seiner zweiten Endstellung in seine erste Endstellung und wieder zurück in seine zweite Endstellung verstellbar ist. Dabei kann der Antrieb das Stellglied vorzugsweise in beliebige Positionen zwischen seiner ersten Endstellung und seiner zweiten Endstellung verstellen, wobei das Stellglied von jeder beliebigen Position in seine erste Endstellung oder in seine zweite Endstellung verstellbar ist. Ferner kann der Antrieb das Stellglied in seiner jeweiligen Position halten. Auf diese Weise ist der Aktuator für eine sehr exakte Regelung von Systemen geeignet.

Die Kupplung ist in ihrem deaktivierten Zustand, in dem sie nicht mit Energie versorgt ist, vorzugsweise nicht wirkend. Durch ein entsprechendes Aktivierungssignal kann die Kupplung mit Energie versorgt werden, sodass sie aktiviert ist und wirkt. Folglich befindet sich das Stellglied bei deaktivierter Kupplung entweder in seiner ersten Endstellung oder in seiner zweiten Endstellung. In einer weiteren Ausführungsform wirkt die Kupplung entweder mechanisch oder magnetisch. Grundsätzlich sind weitere Kupplungsarten ebenso denkbar, sofern diese aktivierbar und deaktivierbar sind.

Das Stellglied weist vorteilhaft ein Kupplungselement auf, wobei das Kupplungselement und das Stellglied fest verbunden oder einstückig ausgebildet sein können und wobei die Anzahl der Kupplungselemente des Stellglieds nicht auf eines beschränkt ist. Das Kupplungselement kann dabei insbesondere in Form eines Spulenkerns ausgebildet sein, wobei der Spulenkern vorteilhaft aus einem ferromagnetischen Material gebildet ist. Es ist ebenso möglich andere Materialien, beispielsweise ferrimagnetische keramische Werkstoffe, zu verwenden, sofern diese in Wechselwirkung mit einem Magnetfeld stehen können.

Der Aktuator weist vorzugsweise eine elektrische Spule auf, mittels derer die Kupplung aktivierbar ist, indem sie bei Bestromung ein Magnetfeld derart ausbildet, dass die Kupplung wirkt und eine gekuppelte Verbindung aufrechterhält. Hierzu kann sich bei bestromter Spule vorteilhaft ein Magnetkreis über das kraftübertragende Element, das Kupplungselement und die Spule ausbilden, wobei durch den Magnetkreis eine Anziehungskraft zwischen dem kraftübertragenden Element und dem Kupplungselement wirkt, sodass diese gekuppelt sind. Ist die elektrische Energieversorgung der Spule unterbrochen, wird die Kupplung deaktiviert und das Stellglied freigegeben, sodass es durch die Rückstelleinrichtung verstellbar ist.

Das kraftübertragende Element und das Kupplungselement weisen vorteilhaft einander zugewandte Flächen auf, sodass die bestromte Spule einen magnetischen Fluss zwischen dem kraftübertragenden Element und dem Kupplungselement derart erzeugt, dass eine hohe Anziehungskraft zwischen dem kraftübertragenden Element und dem Kupplungselement realisierbar ist. Um die erforderliche Spulenleistung und damit den Energieverbrauch für die Aktivierung und die Aufrechterhaltung der Kupplung zu verringern, ist darauf zu achten, die Länge eines energetisch nachteiligen Luftspalts zwischen den einander zugewandten Flächen des kraftübertragenden Elements und des Kupplungselements zu minimieren oder den Luftspalt gänzlich zu vermeiden. Durch die Vermeidung eines Luftspalts, unabhängig von der Position des Stellglieds, wirkt zu jedem Zeitpunkt die größtmögliche Anziehungskraft zwischen dem kraftübertragenden Element und dem Kupplungselements, wodurch weniger elektrische Energie benötigt wird. Dabei ist es vorteilhaft, wenn das kraftübertragende Element und/oder das Kupplungselement zumindest teilweise aus einem Material ausgebildet sind, das eine niedrige Koerzitivkraft aufweist, sodass bei deaktivierter Kupplung die aufgrund von magnetischer Remanenz wirkenden Restanziehungskräfte niedrig sind.

Der Antrieb ist erfindungsgemäß ein elektromechanischer Antrieb, wobei der elektromechanische Antrieb mindestens einen Elektromotor aufweist und der Elektromotor vorzugsweise ein Schrittmotor ist. Der Aktuator ist hierdurch energiesparend ausgeführt. Vorteilhaft erfordert der Antrieb somit nur für die Verstellung des Stellglieds Energie, nicht aber, um das Stellglied in einer bestimmten Position zu halten. Der Elektromotor verstellt erfindungsgemäß das kraftübertragende Element über ein Getriebe oder in einer platzsparenden Ausführungsform als Bestandteil des Getriebes. Als Getriebeart ist erfindungsgemäß eine Kulisse mit Führungsflächen vorgesehen. Eine Spindel mit Spindelmutter, ein Zahnradgetriebe oder ein Zahnstangengetriebe als Getriebeart sind nicht erfindungsgemäß.

Das kraftübertragende Element weist vorzugsweise mindestens einen Kraftaufnahmebereich auf, der derart ausgeformt ist, dass das kraftübertragende Element durch den Antrieb in wenigstens eine Richtung verstellbar ist. Auch kann der Kraftaufnahmebereich derart ausgebildet sein, dass eine Verstellung des kraftübertragenden Elements durch den Antrieb in mehrere Richtungen möglich ist.

Erfindungsgemäß weist der Elektromotor einen Stößel auf, wobei an dem Stößel ein Bolzen oder ein Abrollmittel angeordnet sein kann, der bzw. das mit einer in dem kraftübertragenden Element angeordneten Kulisse mit wenigstens einer Führungsfläche zusammenwirkt und eine lineare Bewegung des Stößels in eine zu dieser schräg bzw. quer gerichtete translatorische Bewegung des kraftübertragenden Elements übersetzt. Es ist ebenso möglich, dass die Kulisse an dem Stößel ausgebildet ist, sodass diese mit einem an dem kraftübertragenden Element angeordneten Bolzen oder Abrollmittel zusammenwirkt und auf die Weise ebenfalls eine translatorische Bewegung des kraftübertragenden Elements oben beschriebener Art bewirkt. Auf diese Weise sind sehr kurze Stellzeiten des Aktuators realisierbar.

Um zu verhindern, dass das Stellglied trotz deaktivierter Kupplung unerwünscht in der entsprechenden Position gehalten wird, muss die durch die Rückstelleinrichtung auf das Stellglied aufgebrachte Kraft vorzugsweise wenigstens größer sein, als eventuelle Restanziehungskräfte der deaktivierten Kupplung, durch die das kraftübertragende Element und das Stellglied gekuppelt bleiben. Selbstverständlich muss die Kraft der Rückstelleinrichtung darüber hinaus größer sein, als sämtliche Kräfte die auf das Stellglied wirken und der Verstellung des Stellglieds entgegenwirken.

In einer anderen bevorzugten Ausführungsform erfordert die Rückstelleinrichtung keine Energieversorgung von außerhalb des Aktuators, sodass das Stellglied auch bei einem Fehlerfall, wie einem Stromausfall, durch die Rückstelleinrichtung verstellbar ist. Dabei ist die Rückstelleinrichtung vorteilhaft in Form einer Feder ausgebildet, wobei diese durch eine Verstellung des Stellglieds derart elastisch verformt wird, dass das Stellglied bei nicht wirkender Kupplung durch die Feder in seine erste Endstellung oder in seine zweite Endstellung verstellbar ist. Selbstverständlich kann die Rückstelleinrichtung auch anderweitig ausgeführt sein, sofern diese das Stellglied bei nicht wirkender Kupplung automatisch verstellt.

In Abhängigkeit der Anwendung des Aktuators ist es von Vorteil, wenn das Stellglied unter anderen, aber nicht ausschließlich, eine Welle, eine Achse, ein Bolzen oder ein Steuerrohr ist. So kann der Aktuator beispielsweise für die Ausführung oder Übertragung einer Hubbewegung genutzt werden. Ist das Stellglied ein Steuerrohr, kann dieses von einem Medium durchströmt werden, sodass mithilfe des Aktuators der Volumenstrom des Mediums einstellbar ist.

Erfindungsgemäß ist der Aktuator ein Coaxialventil. Schrägsitzventile oder Geradsitzventile als Ventilbauformen sind nicht erfindungsgemäß. Dabei ist es von Vorteil, wenn das Stellglied ein Steuerrohr ist, das von einem Medium durchströmbar ist und mit dem der Volumenstrom des Mediums einstellbar bzw. steuerbar ist. Durch die spezielle Bauart des Coaxialventils wirkt der Druck des Mediums überwiegend radial auf das Steuerrohr, sodass dieser nahezu keinen Einfluss auf das Schaltverhalten hat und sich das Coaxialventil auch für hohe Drücke eignet.

Es ist weiterhin von Vorteil, wenn das Coaxialventil bei einer Verstellung des Steuerrohrs in seine erste Endstellung öffnet, wobei darunter zu verstehen ist, dass der maximale Volumenstrom des Mediums fließt und das Coaxialventil vollständig geöffnet ist. Bei einer Verstellung des Steuerrohrs in seine zweite Endstellung wirkt das Steuerrohr mit einem Stellgliedsitz, der ein Ventilsitz zum Verschließen eines Durchgangs ist, derart zusammen, dass das Coaxialventil verschließt, sodass der Volumenstrom des Mediums unterbrochen ist. Vorzugsweise ist das Steuerrohr bei nicht wirkender Kupplung durch die Rückstelleinrichtung in die zweite Endstellung verstellt, so dass der Volumenstrom des Mediums unterbrochen ist. Folglich ist das Coaxialventil als "normally closed" Ventil oder auch NC-Ventil ausgeführt, so dass es in einen sicheren Zustand versetzt ist, wenn sich das Steuerrohr in der geschlossenen Stellung befindet.

Nachfolgend werden mögliche Ausführungsformen des erfindungsgemäßen Aktuators anhand von Figuren näher erläutert.

Es zeigen:
- Fig. 1: eine Querschnittsdarstellung durch einen erfindungsgemäßen Aktuator mit dem Stellglied in seiner zweiten Endstellung, wobei der Aktuator als Coaxialventil ausgebildet ist;
- Fig. 1a: eine Ausschnittsvergrößerung der Darstellung gemäß Fig. 1;
- Fig. 2: eine Querschnittsdarstellung durch einen erfindungsgemäßen Aktuator mit dem Stellglied in seiner ersten Endstellung, wobei die Kupplung aktiviert ist;
- Fig. 3: eine Querschnittsdarstellung durch einen erfindungsgemäßen Aktuator mit dem Stellglied in seiner zweiten Endstellung, unmittelbar nachdem die Kupplung deaktiviert wurde;
- Fig. 4a: eine Querschnittsdarstellung durch einen nicht erfindungsgemäßen Aktuator mit einer Spindel mit Spindelmutter als Getriebe;
- Fig. 4b: eine Querschnittsdarstellung durch einen nicht erfindungsgemäßen Aktuator mit einem Zahnstangengetriebe;
- Fig. 4c: eine Querschnittsdarstellung durch einen nicht erfindungsgemäßen Aktuator mit einem Zahnradgetriebe;
- Fig. 5a: eine Querschnittsdarstellung durch eine weitere Ausführungsform eines erfindungsgemäßen Aktuators mit dem Stellglied in seiner zweiten Endstellung;
- Fig. 5b: eine Querschnittsdarstellung durch eine weitere Ausführungsform eines erfindungsgemäßen Aktuators mit dem Stellglied in seiner ersten Endstellung, wobei die Kupplung aktiviert ist;
- Fig. 5c: eine Querschnittsdarstellung durch eine weitere Ausführungsform eines erfindungsgemäßen Aktuators mit dem Stellglied in seiner zweiten Endstellung, unmittelbar nachdem die Kupplung deaktiviert wurde.

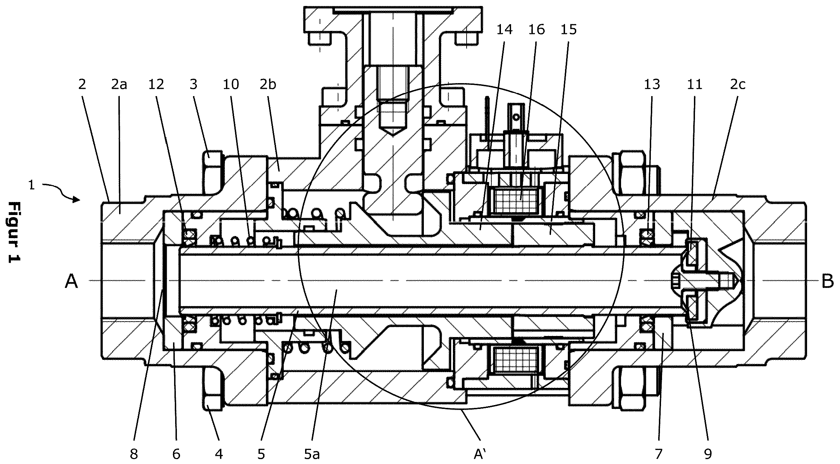

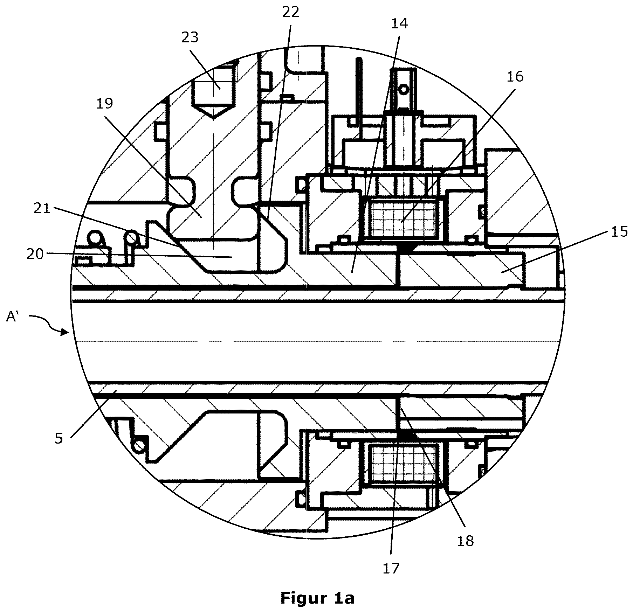

Die Figur 1 zeigt eine Querschnittsdarstellung durch einen erfindungsgemäßen Aktuator 1, wobei der Aktuator 1 als Coaxialventil dargestellt ist. Der Aktuator 1 weist eine beispielhafte Ausführung eines mehrteiligen Gehäuses 2 auf, bestehend aus den Gehäuseteilen 2a, 2b, 2c, wobei die Gehäuseteile 2a, 2b, 2c wahlweise über zwei hintere Zugstäbe 3, 4 sowie über zwei vordere Zugstäbe, die nicht dargestellt sind, verspannt sein können. Es ist ebenso möglich das Gehäuse 2 anderweitig auszuführen. Das Gehäuse 2 weist eine erste Öffnung A und eine zweite Öffnung B auf, wobei ein Medium gleichermaßen durch die erste Öffnung A eintreten und die zweite Öffnung B austreten oder durch die zweite Öffnung B eintreten und die erste Öffnung A austreten kann. Mittels des Aktuators 1 kann der Volumenstrom des Mediums steuerbar sein.

Innerhalb des Gehäuses 2 ist ein Stellglied 5 angeordnet, wobei das Stellglied 5 einen Stellgliedinnenraum 5a aufweist, in dem das Medium geführt werden kann. Das Stellglied 5 ist mittels Gleitlagern 6, 7 im Gehäuse 2 gelagert, sodass es in axialer Richtung in seine erste Endstellung 8 und seine zweite Endstellung 9 verstellbar ist, wobei das Stellglied 5 ebenso auf jede beliebige Position zwischen seiner ersten Endstellung 8 und seiner zweiten Endstellung 9 verstellbar ist. Eine Rückstelleinrichtung, in Form einer Feder 10, beaufschlagt das Stellglied 5 mit einer Federkraft, die es derart in Richtung seiner zweiten Endstellung 9 drückt, dass das Stellglied 5 an einem Stellgliedsitz 11 abdichtend anliegt und der Volumenstrom des Mediums unterbrochen ist. Die Feder 10 kann ebenso anderweitig angeordnet sein, sodass diese beispielsweise eine Zugkraft auf das Stellglied 5 aufbringt. Auch ist eine gänzlich andere Ausführung der Rückstelleinrichtung denkbar. Dynamische Dichtungen 12, 13 verhindern ein ungewolltes Eintreten des Mediums in weitere Bereiche des Gehäuses 2. Um das Gehäuse 2 gegenüber dem Stellglied 5 vollständig abzudichten sowie um eine Verunreinigung von außerhalb des Gehäuses 2 zu verhindern, sind, falls erforderlich, weitere Dichtungen vorzusehen, die vorliegend nicht explizit beschrieben sind.

Die Figur 1a zeigt eine Ausschnittsvergrößerung des Ausschnitts A' der Figur 1. In dem Gehäuse 2 ist eine steuerbare Kupplung 14, 15, 16 angeordnet, die wahlweise als magnetische Kupplung ausgeführt ist. Ebenso ist es möglich, dass die Kupplung beispielsweise mechanisch wirkt. Die Kupplung 14, 15, 16 weist ein kraftübertragendes Element 14, ein Kupplungselement 15 und eine elektrische Spule 16 auf. Das kraftübertragende Element 14 ist auf dem Stellglied 5 beweglich gelagert und durch einen Antrieb, der nicht dargestellt ist, verstellbar. Das Kupplungselement 15 kann optional ein Spulenkern sein, wobei das Kupplungselement 15 wahlweise mit dem Stellglied 5 in axialer Richtung fest verbunden ist. Selbstverständlich sind auch andere Anordnungen wie beispielsweise eine einstückige Ausführung von Stellglied 5 und Kupplungselement 15 denkbar. Die zur Aktivierung der Kupplung 14, 15, 16 bestromte Spule 16 bildet ein Magnetfeld aus, wodurch ein über das kraftübertragende Element 14, das Kupplungselement 15 und die Spule 16 ausgebildeter Magnetkreis eine Anziehungskraft zwischen dem kraftübertragenden Element 14 und dem Kupplungselement 15 erzeugt, sodass die Kupplung 14, 15, 16 wirkt.

Damit das kraftübertragende Element 14 und das Kupplungselement 15 bei der Bestromung der Spule 16 für die Ausbildung der Anziehungskraft in einer energetisch günstigen Position sind und die aktivierte Kupplung 14, 15, 16 wirken kann, ist die Länge das Luftspaltes zwischen den einander zugewandten Flächen 17, 18 des kraftübertragenden Elements 14 und des Kupplungselements 15 zu minimieren, sodass die einander zugewandten Flächen 17, 18 idealerweise, wie vorliegend, aneinander liegen.

Das kraftübertragende Element 14 ist durch den Antrieb optional über ein Getriebe 19, 20 verstellbar, wobei das kraftübertragende Element 14, wie dargestellt, wahlweise auch direkter Bestandteil des Getriebes 19, 20 sein kann. Das Getriebe 19, 20 weist einen Bolzen 19 und eine Kulisse 20 auf, wobei die Kulisse 20 innerhalb des kraftübertragenden Elements 14 ausgebildet ist. Die Kulisse 20 weist einen Kraftaufnahmebereich 21, 22 mit einer ersten Führungsfläche 21 und einer zweiten Führungsfläche 22 auf. Der Bolzen 19 ist mit einem Stößel 23 fest verbunden, wobei der Stößel 23 durch den Antrieb linear hin- und herbewegbar ist. Der Bolzen 19 greift derart in die Kulisse 20 ein, dass er bei einer linearen Bewegung des Stößels 19 durch Wechselwirkung mit der ersten Führungsfläche 21 oder mit der zweiten Führungsfläche 22 eine zu seiner Bewegung quer oder schräg gerichtete Verstellung des kraftübertragenden Elements 14 bewirkt. In der dargestellten Ausführungsform sind der Bolzen 19 und die Kulisse 20 derart ausgebildet, dass das kraftübertragende Element 14 axial in Richtung der ersten Endstellung 8 und der zweiten Endstellung 9 bewegbar ist.

Figur 1 und Figur 1a stellen den Aktuator 1 mit dem Stellglied 5 in der zweiten Endstellung 9 dar, wobei die Kupplung 14, 15, 16 aktiviert oder deaktiviert sein kann. In der dargestellten Ausführungsform nehmen das kraftübertragende Element 14 und das Kupplungselement 15 die energetisch günstigste Position ein, indem sie mit den einander zugewandten Flächen 17, 18 einander anliegen. Die Bestromung der Spule 16 erzeugt eine Anziehungskraft zwischen dem kraftübertragenden Element 14 und dem Kupplungselement 15, sodass sich das kraftübertragende Element 14 und das Kupplungselement 15 miteinander kuppeln. Bewegt der Antrieb den Bolzen 19 derart, dass der Bolzen 19 tiefer in die Kulisse 20 eingreift, verstellt sich das kraftübertragende Element 14 in Richtung der ersten Endstellung 8, wobei das kraftübertragende Element 14 die Bewegung auf das Kupplungselement 15 überträgt, sodass sich das Stellglied 5 ebenfalls in Richtung seiner ersten Endstellung 8 verstellt. Die Verstellung des Stellglieds 5 in Richtung seiner zweiten Endstellung 9 erfolgt analog durch ein Herausfahren des Bolzens 19 aus der Kulisse. Auf diese Weise ist das Stellglied 5 bei wirkender Kupplung 14, 15, 16 in seine erste Endstellung 8 oder in seine zweite Endstellung 9 oder auf jede beliebige Position zwischen seiner ersten Endstellung 8 und seiner zweiten Endstellung 9 verstellbar. Während dem oben beschriebenen Verstellvorgang ist zu gewährleisten, dass die Kraft zwischen dem kraftübertragenden Element 14 und dem Kupplungselement 15 größer ist, als die durch die Feder 10 auf das Stellglied 5 beaufschlagte Federkraft sowie etwaige Reibungskräfte oder weitere wie beispielsweise von dem Medium auf das Stellglied 5 wirkende Kräfte. Dabei ist zu beachten, dass die von der Feder 10 auf das Stellglied 5 beaufschlagte Federkraft mit zunehmender Verstellung des Stellglieds 5 in Richtung seiner ersten Endstellung 8 zunimmt.

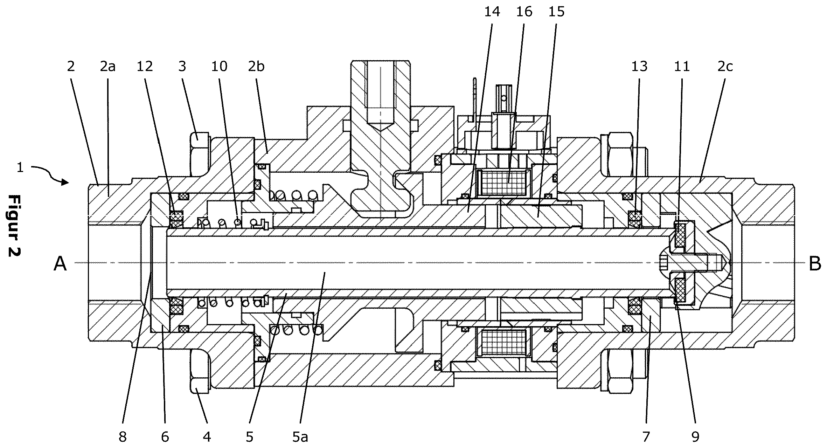

Die Figur 2 stellt das Stellglied in seiner ersten Endstellung 8 dar, wobei der Aktuator 1 das Fließen eines Volumenstroms des Mediums ermöglicht. Die Kupplung 14, 15, 16 ist in diesem Zustand aktiviert und die Spule 16 bestromt, wodurch das kraftübertragende Element 14 und das Kupplungselement 15 gekuppelt sind. Die Feder 10 ist in dieser Position des Stellglieds 5 stärker elastisch verformt als in dem in Figur 1 dargestellten Zustand und beaufschlagt das Stellglied 5 dementsprechend mit einer höheren Federkraft in Richtung seiner zweiten Endstellung 9. Folglich muss die zwischen dem kraftübertragenden Element 14 und dem Kupplungselement 15 wirkenden Anziehungskraft wenigstens größer als die auf das Stellglied 5 wirkende Federkraft sein, um das Stellglied 5 in Position zu halten und den Volumenstrom des Mediums aufrechtzuerhalten. Der Antrieb kann in diesem Zustand stromfrei sein.

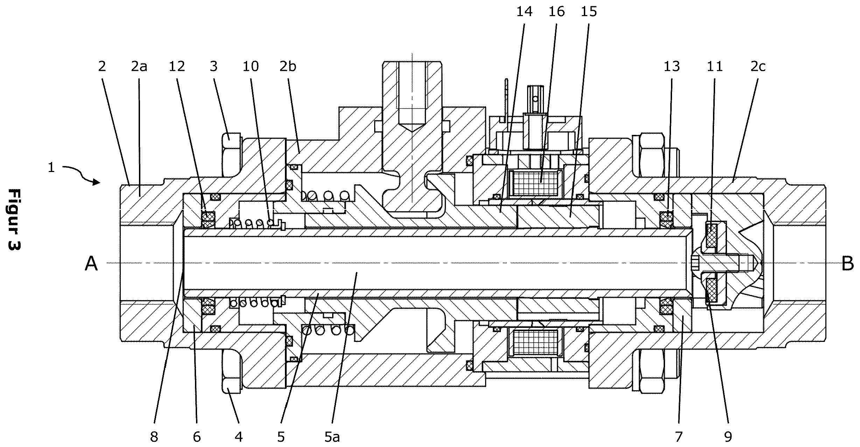

Die Figur 3 stellt den Aktuator 1 in einem Zustand unmittelbar nach Deaktivierung der Kupplung 14, 15, 16 dar, wobei die Spule 16 stromfrei und das Stellglied 5 in seine zweite Endstellung 9 verstellt ist. Wird die Spule 16 ausgehend von dem in Figur 2 dargestellten Zustand in einen stromfreien Zustand versetzt, löst sich die zwischen dem kraftübertragenden Element 14 und dem Kupplungselement 15 bestehende Anziehungskraft auf, wodurch das Stellglied 5 freigegeben und mittels der Feder 10 in seine zweite Endstellung 9 verstellbar ist. Das kraftübertragende Element 14 bleibt dabei in der entsprechenden Position stehen. Es ist zu beachten, dass aufgrund von magnetischer Remanenz auch bei aktivierter Kupplung 14, 15, 16 noch Restanziehungskräfte wirken können, die von der Feder 10 zu überwinden sind.

Um den resultierenden energetisch nachteiligen Luftspalt zwischen dem kraftübertragenden Element 14 und dem Kupplungselement 15 zu schließen, kann das kraftübertragende Element 14 von dem Antrieb anschließend in Richtung der geschlossenen Stellung 9 verstellt werden, sodass das kraftübertragende Element 14 und das Kupplungselement 15 vor erneuter Bestromung der Spule 16 wieder die energetisch günstigste Lage zueinander einnehmen. Selbstverständlich gilt der oben beschriebene Vorgang auch für jede beliebige Position des Stellglieds 5 und nicht ausschließlich ausgehend von der in Figur 2 dargestellten Position.

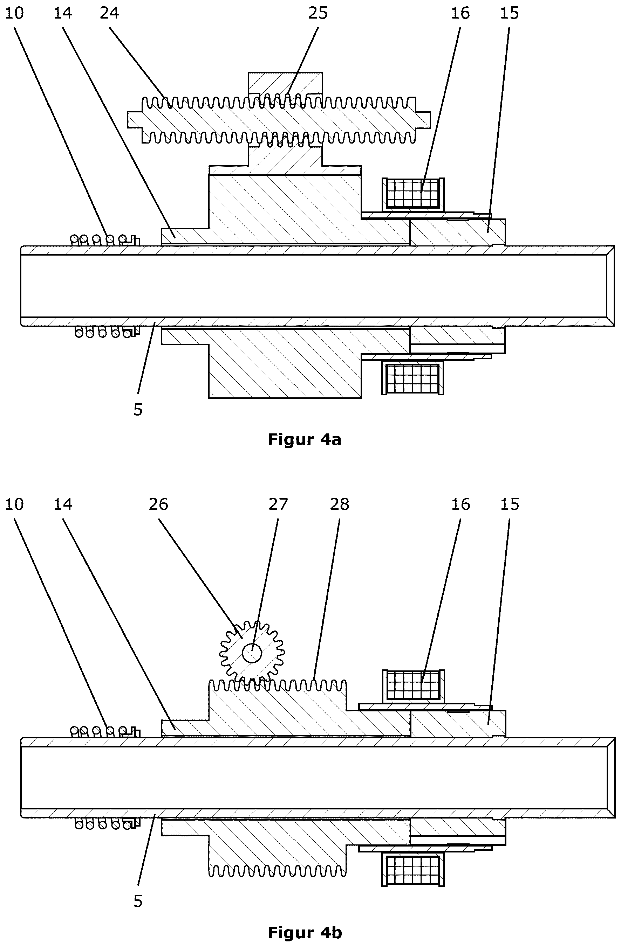

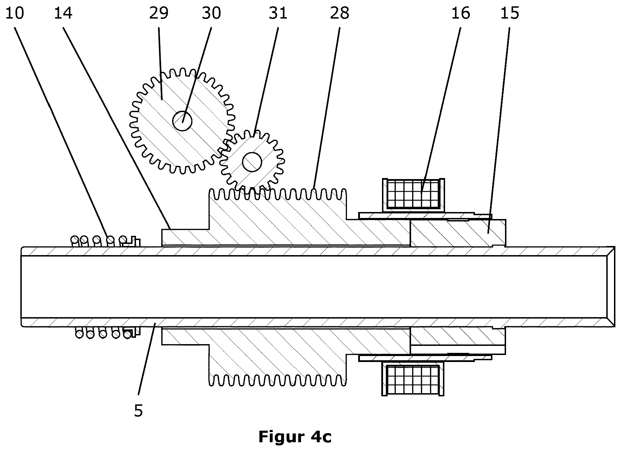

Die Figuren 4a, 4b und 4c stellen jeweils nicht erfindungsgemäße Ausführungsformen für die Verstellung des kraftübertragenden Elements 14 dar. Die Figur 4a zeigt eine vereinfachte Darstellung eines Getriebes 24, 25, das eine Spindel 24 und eine Spindelmutter 25 aufweist, wobei die Spindelmutter 25 mit dem kraftübertragenden Element 14 in axialer Richtung fest verbunden ist. Die Spindel 24 wird durch einen Antrieb, der nicht dargestellt ist, rotatorisch bewegt, wobei die rotatorische Bewegung durch die Spindelmutter 25 in eine translatorische Bewegung übersetzt wird, sodass das kraftübertragende Element 14 in axialer Richtung verstellbar ist.

Die Figur 4b zeigt eine vereinfachte Darstellung eines Zahnstangengetriebes 26, 14, das ein Zahnrad 26 und das kraftübertragende Element 14 umfasst. Das Zahnrad 26 wird über eine Welle 27 mittels eines Antriebes, der nicht dargestellt ist, rotatorisch bewegt, wobei das Zahnrad 26 in ein Zahnprofil 28 des kraftübertragenden Elements 14 eingreift, sodass dieses in axialer Richtung verstellbar ist.

Die Figur 4c zeigt eine vereinfachte Darstellung eines Zahnradgetriebes 29, 31, das ein Zahnrad 29 und ein Ritzel 31 aufweist, wobei das Zahnrad 29 über eine Welle 27 mittels eines Antriebes, der nicht dargestellt ist, rotatorisch bewegbar ist, sodass das Zahnrad 29 das Ritzel 31 antreibt. Selbstverständlich kann das Zahnradgetriebe 29, 31 auch mehr als die dargestellten Getriebestufen umfassen. Das Ritzel 31 greift beispielhaft in das Zahnprofil 28 des kraftübertragenden Elements 14 ein, wobei das Zahnradgetriebe 29, 31 das kraftübertragenden Element 14 auch anderweitig verstellen kann.

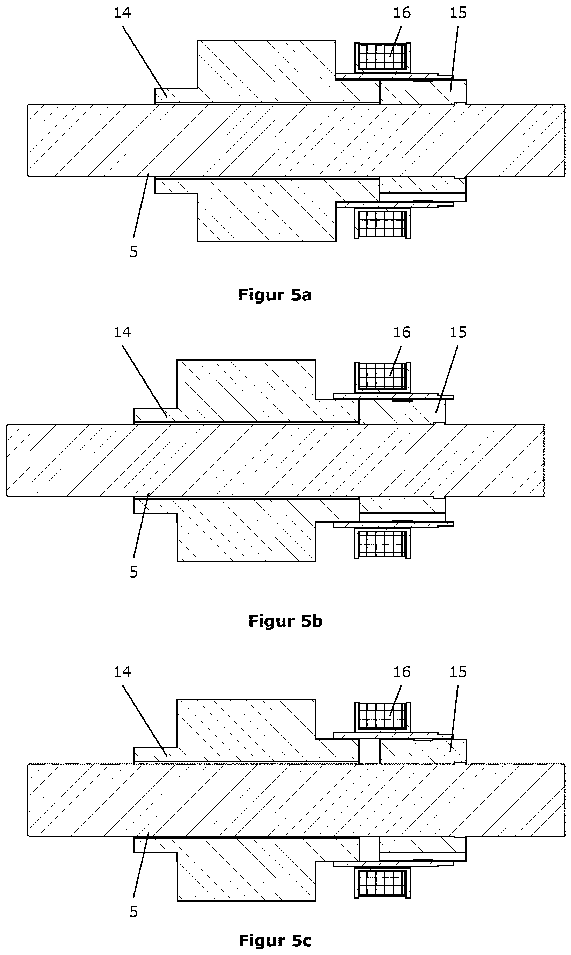

Die Figuren 5a, 5b und 5c stellen eine weitere mögliche, stark vereinfacht dargestellte, Ausführungsform des erfindungsgemäßen Aktuators 1 dar, wobei erfindungswesentliche Elemente wie das Getriebe 19, 20 oder die Rückstelleinrichtung in Form der Feder 10 nicht dargestellt sind. In dieser Ausführungsform kann das Stellglied 5 beispielsweise eine Welle, ein Bolzen oder eine Achse sein. Fig. 5a zeigt das Stellglied 5 in seiner zweiten Endstellung 9. Fig. 5b zeigt das Stellglied 5 in seiner ersten Endstellung 8, wobei die Kupplung 14, 15, 16 aktiviert ist. Fig. 5c zeigt das Stellglied 5 unmittelbar nach der Deaktivierung der Kupplung 14, 15, 16 in der zweiten Endstellung 9, wobei ein Luftspalt zwischen dem kraftübertragenden Element 14 und dem Kupplungselement 15 besteht. Die Verschiebung des Stellglieds 5 erfolgt wie in den vorherigen Abschnitten beschrieben. Ein derart ausgeführter Aktuator 1 kann beispielsweise als Schrägsitzventil genutzt werden, wobei das Stellglied 5 mittels einer Hubbewegung weitere Elemente (hier nicht dargestellt) derart verschiebt, dass das Ventil öffnet oder schließt.

**Bezugszeichen**

| | | | |
|---|---|---|---|
| 1 | Aktuator | 28 | Zahnprofil |
| 2 | Gehäuse | 29 | Zahnrad |
| 2a | Gehäuseteil | 30 | Welle |
| 2b | Gehäuseteil | 31 | Ritzel |
| 2c | Gehäuseteil | A | erste Öffnung |
| 3 | Zugstab | B | zweite Öffnung |
| 4 | Zugstab | | |
| 5 | Stellglied | | |
| 5a | Stellgliedinnenraum | | |
| 6 | Gleitlager | | |
| 7 | Gleitlager | | |
| 8 | erste Endstellung | | |
| 9 | zweite Endstellung | | |
| 10 | Feder | | |
| 11 | Stellgliedsitz | | |
| 12 | dynamische Dichtung | | |
| 13 | dynamische Dichtung | | |
| 14 | kraftübertragendes Element | | |
| 15 | Kupplungselement | | |
| 16 | Spule | | |
| 17 | zugewandte Fläche | | |
| 18 | zugewandte Fläche | | |
| 19 | Bolzen | | |
| 20 | Kulisse | | |
| 21 | erste Führungsfläche | | |
| 22 | zweite Führungsfläche | | |
| 23 | Stößel | | |
| 24 | Spindel | | |
| 25 | Spindelmutter | | |
| 26 | Zahnrad | | |
| 27 | Welle | | |

## Patentansprüche

1. Aktuator (1) in Form eines Coaxialventils mit einem beweglich gelagerten Stellglied (5) und mindestens einem Antrieb zur Verstellung des Stellgliedes (5) zwischen zwei Endstellungen (8 ,9), wobei der Antrieb auf ein relativ zum Stellglied (5) beweglich gelagertes kraftübertragendes Element (14) wirkt, und wobei das kraftübertragende Element (14) und das Stellglied (5) mittels einer gesteuerten Kupplung (14, 15, 16) kuppelbar sind, und wobei das Stellglied (5) nur bei wirkender Kupplung (14, 15, 16) mittels des Antriebs in Richtung seiner einen ersten Endstellung (8) und/oder in Richtung seiner einen zweiten Endstellung (9) verstellbar ist, und wobei eine Rückstelleinrichtung das Stellglied (5) bei nicht wirkender Kupplung (14, 15, 16) in seine erste Endstellung (8) oder in seine zweite Endstellung (9) verstellt, wobei der Antrieb ein elektromechanischer Antrieb ist, wobei der elektromechanische Antrieb mindestens einen Elektromotor aufweist, welcher das kraftübertragende Element (14) über ein Getriebe (19, 20) oder als Bestandteil eines Getriebes (19, 20) verstellt, **dadurch gekennzeichnet, dass** das Getriebe eine Kulisse (20) mit Führungsflächen (21, 22) ist, wobei der Elektromotor einen Stößel (23) linear hin- und herbewegt, wobei am Stößel (23) bzw. dem kraftübertragenden Element (14) eine Kulisse (20) mit wenigstens einer Führungsfläche (21, 22) angeordnet ist, die mit einem an dem kraftübertragenden Element (14) bzw. an dem Stößel (23) angeordneten Bolzen (19) oder Abrollmittel zusammenwirkt, um die translatorische Bewegung des Stößels (23) in eine schräg bzw. quer dazu gerichtete translatorische Bewegung des kraftübertragenden Elements (14) zu übersetzen.

2. Aktuator (1) nach Anspruch 1, **dadurch gekennzeichnet, dass** entweder das Stellglied (5) bei wirkender Kupplung (14, 15, 16) mittels des Antriebs von einer Endstellung (8, 9) in die andere Endstellung (8, 9) und zurück und/oder auf beliebige Positionen zwischen den zwei Endstellungen (8, 9) verstellbar ist
und/oder
die Kupplung (14, 15, 16) derart ausgebildet ist, dass sie nur bei einem Aktivierungssignal wirkt und in einem deaktivierten Zustand nicht wirkend ist.

3. Aktuator (1) nach einem der vorstehenden Ansprüche, **dadurch gekennzeichnet, dass** die Kupplung (14, 15, 16) mechanisch oder magnetisch wirkt.

4. Aktuator (1) nach einem der vorstehenden Ansprüche, **dadurch gekennzeichnet, dass** das Stellglied (5) ein Kupplungselement (15), insbesondere in Form eines Spulenkerns, welcher insbesondere aus ferromagnetischem Material gebildet ist, aufweist.

5. Aktuator (1) nach Anspruch 4, **dadurch gekennzeichnet, dass** entweder der Aktuator (1) eine elektrische Spule (16) aufweist, welche im bestromten Zustand ein Magnetfeld erzeugt, sodass die Bestromung der Spule (16) zur Aktivierung und Aufrechterhaltung der Kupplung (14, 15, 16) dient
und/oder
bei bestromter Spule (16) ein Magnetkreis über das kraftübertragende Element (14), das Kupplungselement (15) und die Spule (16) ausgebildet ist, sodass zwischen dem kraftübertragenden Element (14) und dem Kupplungselement (15) eine Anziehungskraft derart ausgebildet ist, dass die Kupplung (14, 15, 16) wirkt.

6. Aktuator (1) nach einem Ansprüche 4 oder 5, **dadurch gekennzeichnet, dass** entweder das kraftübertragende Element (14) und das Kupplungselement (15) einander zugewandte Flächen (17, 18) aufweisen und die Länge des Luftspaltes zwischen den Flächen (17, 18), zur Aktivierung der Kupplung (14, 15, 16), hinreichend klein bzw. der Magnetkraft angepasst sein muss
und/oder
das kraftübertragende Element (14) und/oder das Kupplungselement (15) zumindest teilweise aus einem Material mit niedriger Koerzitivkraft gebildet sind.

7. Aktuator (1) nach einem der vorstehenden Ansprüche, **dadurch gekennzeichnet, dass** der Elektromotor ein Schrittmotor ist.

8. Aktuator (1) nach einem der vorstehenden Ansprüche, **dadurch gekennzeichnet, dass** das kraftübertragende Element (14) mindestens einen Kraftaufnahmebereich (21, 22) aufweist, wobei der Kraftaufnahmebereich (21, 22) derart ausgebildet ist, dass das kraftübertragende Element (14) mittels des Antriebs in mindestens eine Richtung verstellbar ist.

9. Aktuator (1) nach einem der vorstehenden Ansprüche, **dadurch gekennzeichnet, dass**
entweder die Rückstelleinrichtung auf das Stellglied (5) derart wirkt, dass sie bei etwaig bestehenden Restkräften der deaktivierten Kupplung (14, 15, 16), durch die das kraftübertragende Element (14) und das Stellglied (5) gekuppelt bleiben, die Kupplung (14, 15, 16) löst, indem sie das Stellglied (5) von dem kraftübertragenden Element (14) trennt und in seine erste Endstellung (8) oder in seine zweite Endstellung (9) verstellt und/oder die Rückstelleinrichtung, insbesondere in Form von mindestens einer Feder (10), das Stellglied (5) ohne externe Energieversorgung in seine erste Endstellung (8) oder in seine zweite Endstellung (9) verstellt.

10. Aktuator (1) nach einem der vorstehenden Ansprüche, **dadurch gekennzeichnet, dass** das Stellglied (5) entweder
- eine Welle oder
- eine Achse oder
- ein Bolzen oder
- ein Steuerrohr eines Ventils ist.

11. Aktuator (1) nach einem der vorstehenden Ansprüche, **dadurch gekennzeichnet, dass** das Stellglied (5) ein Steuerrohr ist, das von einem Medium durchströmbar ist.

12. Aktuator (1) nach Anspruch 11, **dadurch gekennzeichnet, dass** entweder das Coaxialventil bei Verstellung des Steuerrohrs in seine erste Endstellung (8) öffnet und das Steuerrohr bei Verstellung in seine zweite Endstellung (9) mit einem Stellgliedsitz (11), wobei der Stellgliedsitz (11) ein Ventilsitz ist, derart zusammenwirkt, dass es das Coaxialventil verschließt
und/oder
das Steuerrohr bei nicht wirkender Kupplung (14, 15, 16) durch die Rückstelleinrichtung in seine zweite Endstellung verstellt ist und das Coaxialventil verschließt.

## Claims

1. An actuator (1) in the form of a coaxial valve comprising a movably mounted actuating element (5) and at least one drive for moving the actuating element (5) between two end positions (8, 9), wherein the drive acts on a force-transmitting element (14) mounted so as to be movable relative to the actuator (5), and wherein the force-transmitting element (14) and the actuator (5) can be coupled by means of a controlled clutch (14, 15, 16), and wherein the actuator (5) can only be moved, whilst the clutch is engaged, (14, 15, 16) is movable by the drive towards its first end position (8) and/or towards its second end position (9), and wherein a return mechanism moves the actuator (5), when the clutch (14, 15, 16) is not effective, into its first end position (8) or into its second end position (9), wherein the drive is an electromechanical drive, wherein the electromechanical drive comprises at least one electric motor which moves the force-transmitting element (14) via a gearbox (19, 20) or as part of a gearbox (19, 20), **characterised in that** the gearbox is a cam mechanism (20) with guide surfaces (21, 22), wherein the electric motor moves a plunger (23) linearly back and forth, wherein a cam mechanism (20) with at least one guide surface (21, 22) is arranged on the push rod (23) or the force-transmitting element (14), which surface interacts with a pin (19) or rolling means arranged on the force-transmitting element (14) or on the push rod (23), in order to convert the translational movement of the push rod (23) into a translational movement of the force-transmitting element (14) directed obliquely or transversely thereto.

2. Actuator (1) according to claim 1, **characterised in that**, when the coupling (14, 15, 16) is engaged, the actuating element (5) can be moved by the drive from one end position (8, 9) to the other end position (8, 9) and back, and/or to any position between the two end positions (8, 9)
and/or
the coupling (14, 15, 16) is designed such that it operates only when an activation signal is present and is inactive in a deactivated state.

3. Actuator (1) according to one of the preceding claims, **characterised in that** the clutch (14, 15, 16) operates mechanically or magnetically.

4. An actuator (1) according to any one of the preceding claims, **characterised in that** the actuating element (5) comprises a coupling element (15), in particular in the form of a coil core, which is formed in particular from ferromagnetic material.

5. Actuator (1) according to claim 4, **characterised in that** either the actuator (1) comprises an electric coil (16) which, when energised, generates a magnetic field, such that energising the coil (16) serves to activate and maintain the clutch (14, 15, 16) and/or
when the coil (16) is energised, a magnetic circuit is formed via the force-transmitting element (14), the coupling element (15) and the coil (16), such that an attractive force is generated between the force-transmitting element (14) and the coupling element (15) in such a way that the coupling (14, 15, 16) operates.

6. An actuator (1) according to claim 4 or 5, **characterised in that** either the force-transmitting element (14) and the coupling element (15) have surfaces (17, 18) facing one another, and the length of the air gap between the surfaces (17, 18) must be sufficiently small, or must be adapted to the magnetic force, to activate the clutch (14, 15, 16), must be sufficiently small or adapted to the magnetic force
and/or
the force-transmitting element (14) and/or the coupling element (15) are formed, at least in part, from a material with low coercive force.

7. An actuator (1) according to any one of the preceding claims, **characterised in that** the electric motor is a stepper motor.

8. An actuator (1) according to any one of the preceding claims, **characterised in that** the force-transmitting element (14) comprises at least one force-receiving region (21, 22), wherein the force-receiving region (21, 22) is configured such that the force-transmitting element (14) is adjustable in at least one direction by means of the drive.

9. Actuator (1) according to one of the preceding claims, **characterised in that** either the return mechanism acts on the actuator (5) in such a way that, in the event of any residual forces from the deactivated coupling (14, 15, 16) - by which the force-transmitting element (14) and the actuator (5) remain coupled - it releases the coupling (14, 15, 16) by separating the actuator (5) from the force-transmitting element (14) and moving it to its first end position (8) or to its second end position (9), and/or the return mechanism, in particular in the form of at least one spring (10), moves the actuator (5) to its first end position (8) or to its second end position (9) without an external energy supply.

10. Actuator (1) according to one of the preceding claims, **characterised in that** the actuator element (5) is either
- a shaft, or
- an axis, or
- a bolt, or
- a control tube of a valve.

11. Actuator (1) according to one of the preceding claims, **characterised in that** the actuating element (5) is a control tube through which a medium can flow.

12. Actuator (1) according to claim 11, **characterised in that** either the coaxial valve opens when the control tube is moved to its first end position (8) and the control tube closes when moved to its second end position (9) with an actuator seat (11), wherein the actuator seat (11) is a valve seat, such that it closes the coaxial valve
and/or
when the clutch (14, 15, 16) is disengaged, the control tube is moved by the return mechanism into its second end position and closes the coaxial valve.

## Revendications

1. Actionneur (1) sous forme d'une vanne coaxiale avec un organe de réglage (5) monté de manière mobile et au moins un entraînement pour déplacer l'organe de réglage (5) entre deux positions extrêmes (8,9), l'entraînement agissant sur un élément transmetteur de force (14) monté de manière mobile par rapport à l'organe de réglage (5), et l'élément transmetteur de force (14) et l'organe de réglage (5) étant accouplables au moyen d'un embrayage commandé (14, 15, 16), et l'organe de réglage (5) n'étant déplaçable au moyen de l'entraînement que lorsque l'embrayage (14, 15, 16) agit, en direction de sa première position extrême (8) et/ou en direction de sa deuxième position extrême (9), et un dispositif de rappel déplaçant l'organe de réglage (5) dans sa première position extrême (8) ou dans sa deuxième position extrême (9) lorsque l'embrayage (14, 15, 16) n'agit pas, l'entraînement étant un entraînement électromécanique, l'entraînement électromécanique comprenant au moins un moteur électrique, lequel déplace l'élément transmetteur de force (14) via un engrenage (19, 20) ou en tant que partie d'un engrenage (19, 20), **caractérisé en ce que** l'engrenage est une coulisse (20) avec des surfaces de guidage (21, 22), le moteur électrique déplaçant un poussoir (23) linéairement en va-et-vient, une coulisse (20) avec au moins une surface de guidage (21, 22) étant disposée sur le poussoir (23) ou sur l'élément transmetteur de force (14), laquelle coopère avec un boulon (19) ou un moyen de roulement disposé sur l'élément transmetteur de force (14) ou sur le poussoir (23), afin de convertir le mouvement de translation du poussoir (23) en un mouvement de translation de l'élément transmetteur de force (14) dirigé de manière oblique ou transversale par rapport à celui-ci.

2. Actionneur (1) selon la revendication 1, **caractérisé en ce que** soit l'organe de réglage (5) est déplaçable au moyen de l'entraînement, lorsque l'embrayage (14, 15, 16) agit, d'une position extrême (8, 9) à l'autre position extrême (8, 9) et retour et/ou sur des positions quelconques entre les deux positions extrêmes (8, 9)
et/ou
l'embrayage (14, 15, 16) est conçu de telle sorte qu'il n'agit que lors d'un signal d'activation et n'est pas agissant dans un état désactivé.

3. Actionneur (1) selon l'une des revendications précédentes, **caractérisé en ce que** l'embrayage (14, 15, 16) agit de manière mécanique ou magnétique.

4. Actionneur (1) selon l'une des revendications précédentes, **caractérisé en ce que** l'organe de réglage (5) comprend un élément d'embrayage (15), notamment sous forme d'un noyau de bobine, lequel est notamment constitué d'un matériau ferromagnétique.

5. Actionneur (1) selon la revendication 4, **caractérisé en ce que** soit l'actionneur (1) comprend une bobine électrique (16), laquelle, lorsqu'elle est alimentée en courant, génère un champ magnétique, de sorte que l'alimentation en courant de la bobine (16) sert à l'activation et au maintien de l'embrayage (14, 15, 16)
et/ou
lorsque la bobine (16) est alimentée en courant, un circuit magnétique est formé via l'élément transmetteur de force (14), l'élément d'embrayage (15) et la bobine (16), de sorte qu'une force d'attraction est formée entre l'élément transmetteur de force (14) et l'élément d'embrayage (15) de telle sorte que l'embrayage (14, 15, 16) agit.

6. Actionneur (1) selon l'une des revendications 4 ou 5, **caractérisé en ce que** soit l'élément transmetteur de force (14) et l'élément d'embrayage (15) présentent des surfaces (17, 18) qui se font face et la longueur de l'entrefer entre les surfaces (17, 18), pour l'activation de l'embrayage (14, 15, 16), doit être suffisamment petite ou adaptée à la force magnétique et/ou
l'élément transmetteur de force (14) et/ou l'élément d'embrayage (15) sont constitués au moins partiellement d'un matériau à faible force coercitive.

7. Actionneur (1) selon l'une des revendications précédentes, **caractérisé en ce que** le moteur électrique est un moteur pas à pas.

8. Actionneur (1) selon l'une des revendications précédentes, **caractérisé en ce que** l'élément transmetteur de force (14) comprend au moins une zone de prise de force (21, 22), la zone de prise de force (21, 22) étant conçue de telle sorte que l'élément transmetteur de force (14) est déplaçable au moyen de l'entraînement dans au moins une direction.

9. Actionneur (1) selon l'une des revendications précédentes, **caractérisé en ce que** soit le dispositif de rappel agit sur l'organe de réglage (5) de telle sorte qu'il, en cas de forces résiduelles éventuellement existantes de l'embrayage désactivé (14, 15, 16), par lesquelles l'élément transmetteur de force (14) et l'organe de réglage (5) restent accouplés, libère l'embrayage (14, 15, 16) en séparant l'organe de réglage (5) de l'élément transmetteur de force (14) et en déplaçant l'organe de réglage (5) dans sa première position extrême (8) ou dans sa deuxième position extrême (9) et/ou le dispositif de rappel, notamment sous forme d'au moins un ressort (10), déplace l'organe de réglage (5) dans sa première position extrême (8) ou dans sa deuxième position extrême (9) sans alimentation externe en énergie.

10. Actionneur (1) selon l'une des revendications précédentes, **caractérisé en ce que** l'organe de réglage (5) est soit
- un arbre ou
- un axe ou
- un boulon ou
- un tube de commande d'une vanne.

11. Actionneur (1) selon l'une des revendications précédentes, **caractérisé en ce que** l'organe de réglage (5) est un tube de commande traversable par un fluide.

12. Actionneur (1) selon la revendication 11, **caractérisé en ce que** soit la vanne coaxiale s'ouvre lors du déplacement du tube de commande dans sa première position extrême (8) et le tube de commande, lors du déplacement dans sa deuxième position extrême (9), coopère avec un siège d'organe de réglage (11), le siège d'organe de réglage (11) étant un siège de vanne, de telle sorte qu'il ferme la vanne coaxiale
et/ou
le tube de commande, lorsque l'embrayage (14, 15, 16) n'agit pas, est déplacé dans sa deuxième position extrême par le dispositif de rappel et la vanne coaxiale est fermée.
